# EUROPÄISCHE PATENTANMELDUNG

(11) **EP 2 050 555 A1**
(43) Veröffentlichungstag der Anmeldung: **22.04.2009**
(21) Anmeldenummer: 07020469.8
(22) Anmeldetag: 19.10.2007
(51) Int. Cl.: B29C 45/76

(54) **Verfahren zum Spritzgießen eines Gummiformteils in einer Gummispritzgießmaschine**

(71) Anmelder: MAPLAN Maschinen und technische Anlagen, Planungs- und Fertigungsgesellschaft m.b.H, 2630 Ternitz (AT)
(72) Erfinder: Pichler, Alois, 2871 Zöbern (AT)
(74) Vertreter: Gosdin, Michael

(57) **Zusammenfassung**

Die Erfindung betrifft ein Verfahren zum Spritzgießen eines Gummi-Formteils in einer Gummispritzgießmaschine (1), wobei die Gummi-Spritzgießmaschine (1) ein mindestens zweiteiliges Formwerkzeug (2, 3) sowie mindestens einen Aktuator (4) zur Ausführung einer Hilfsbewegung während des Spritzgießprozesses ausweist, wobei der Spritzgießzyklus der Maschine von einer Maschinensteuerung (5) gemäß einem gespeicherten Maschinenprogramm (6) gesteuert bzw. geregelt wird, wobei das Verfahren die Schritte aufweist: a) Hinterlegen eines Maschinenprogramms (6) in der Maschinensteuerung (5), wobei das Maschinenprogramm (6) die Steuerbefehle für zumindest einen vollständigen Spritzgießzyklus und insbesondere für die Bewegung des mindestens einen Aktuators (4) aufweist; b) Ausführung des Maschinenprogramms (6) für eine gewünschte Anzahl Spritzgießzyklen, wobei das Maschinenprogramm (6) veranlasst, dass der zumindest eine Aktuator (4) mit vorgegebenen Bewegungsparametern eine definierte Bewegung (s) ausführt. Um eine flexiblere Handhabung der Gummi-Spritzgießmaschine zu ermöglichen, sieht die Erfindung vor, dass die Parameter (t₀, t₁, s₀, s₁, v, a, B) der Bewegung des mindestens einen Aktuators (4) vor dem Start des Spritzgießzyklus über eine Bedienerschnittstelle (7) der Spritzgießmaschine (1) in die Maschinensteuerung (5) eingegeben wird, wobei die über die Bedienerschnittstelle (7) eingegebenen Daten über Schnittstellen des Maschinenprogramms (6) in dieses aufgenommen werden.

## Beschreibung

Die Erfindung betrifft ein Verfahren zum Spritzgießen eines Gummi-Formteils in einer Gummispritzgießmaschine, wobei die Gummi-Spritzgießmaschine ein mindestens zweiteiliges Formwerkzeug sowie mindestens einen vorzugsweise als pneumatisches oder hydraulisches Kolben-Zylinder-System ausgebildeten Aktuator zur Ausführung einer Hilfsbewegung während des Spritzgießprozesses aufweist, wobei der Spritzgießzyklus der Maschine von einer Maschinensteuerung gemäß einem gespeicherten Maschinenprogramm gesteuert bzw. geregelt wird und wobei das Verfahren die Schritte aufweist:
a) Hinterlegen bzw. Speichern eines Maschinenprogramms in der Maschinensteuerung oder in einem der Maschinensteuerung zugeordneten Speicherelement, wobei das Maschinenprogramm die Steuerbefehle für zumindest einen vollständigen Spritzgießzyklus und insbesondere für die Bewegung des mindestens einen Aktuators aufweist;
b) Ausführung des Maschinenprogramms für eine gewünschte Anzahl Spritzgießzyklen, wobei das Maschinenprogramm veranlasst, dass der zumindest eine Aktuator mit vorgegebenen Bewegungsparametern eine definierte Bewegung ausführt.

Beim Spritzgießen von Gummiteilen in Gummispritzgießmaschinen ist es bekannt, an der Spritzgießmaschine zusätzliche Kolben-Zylinder-Systeme für die verschiedensten Aufgaben einzusetzen. Beispiele für die Aufgaben derartiger Hilfssysteme (hier als Aktuatoren bezeichnet) sind das Zentrieren von Einlegeteilen, das Ausstoßen von fertig gespritzten Teilen oder das Bewegen von Kernzügen.

Die Bewegung der Aktuatoren erfolgt durch das Maschinenprogramm durch entsprechende Programmierung desselben. Vor dem Betrieb der Spritzgießmaschine wird das Maschinenprogramm geschrieben und in der Maschinensteuerung gespeichert. Bei der Durchführung der Fertigung von Gummiformteilen wird das Maschinenprogramm abgefahren und eine gewünschte Anzahl Spritzgießzyklen durchgeführt.

Das Maschinenprogramm veranlasst dabei auch die Betätigung der Aktuatoren für die genannten Hilfsbewegungen. Demgemäß werden - nach spezifischen Kundenwünschen bei der Programmierung des Maschinenprogramms - die benötigten Parameter für die Bewegung der Aktuatoren definiert und gespeichert. Dabei kommt einerseits die Größe der Verschiebebewegung sowie der Zeitpunkt in Betracht, zu dem die Bewegung ausgelöst werden soll (unter Zeitpunkt ist hierbei auch die relative Zeit innerhalb eines Spritzgießzyklus zu verstehen, wenn z. B. an einem bestimmten Punkt des Zyklus der Auswerfer für das Formteil betätigt werden soll). Ferner kann auch der Verlauf der Verfahrgeschwindigkeit oder der Beschleunigung des Aktuators relevant sein und programmiert werden. Ein weiterer, wichtiger Parameter kann eine Bedingung sein, die zu überwachen ist und die gegeben sein muss, damit der Aktuator überhaupt betätigt wird. Beispielsweise setzt die Betätigung eines Auswerfers voraus, dass das Spritzgießwerkzeug geöffnet ist. Nur wenn diese Bedingung erfüllt ist, darf der Aktuator betätigt werden, der den Auswerfer bedient.

Nachteilig ist bei der erläuterten bekannten Vorgehensweise, dass für jedes Formteil, das auf der Gummispritzgießmaschine zu fertigen ist, ein individuelles Maschinenprogramm geschrieben werden muss, um den spezifischen konkreten Randbedingungen Rechnung zu tragen. Das hat zur Folge, dass insbesondere bei auch nur geringfügigen Variationen des Spritzgießzyklus das Maschinenprogramm zu überarbeiten und neu in der Maschinensteuerung zu speichern ist, um den folgenden Spritzgießbetrieb vorzubereiten. Demgemäß ist ein nicht unerheblicher Programmieraufwand erforderlich. Ferner ist es nachteilig, dass hierfür entsprechende Programmiergeräte zur Verfügung stehen müssen, was ein entsprechendes Investitionsvolumen erfordert.

Der Erfindung liegt daher die **Aufgabe** zugrunde, ein Verfahren der eingangs genannten Art so fortzubilden, dass die erwähnten Nachteile vermieden werden können. Es soll also in einfacherer Weise möglich sein, insbesondere die als Nebenaggregate betriebenen Aktuatoren in einfacherer Weise programmieren zu können, wobei sowohl der Aufwand an Programmierarbeit als auch der Bedarf an Hardware gering bleiben soll.

Die **Lösung** dieser Aufgabe durch die Erfindung ist **dadurch gekennzeichnet, dass** die Parameter der Bewegung des mindestens einen Aktuators vor dem Start des Spritzgießzyklus über eine Bedienerschnittstelle der Spritzgießmaschine in die Maschinensteuerung eingegeben wird, wobei die über die Bedienerschnittstelle eingegebenen Daten über Schnittstellen des Maschinenprogramms in dieses aufgenommen werden.

Damit wird es möglich, Variationen des Spritzgießzyklus zu fahren, ohne das Maschinenprogramm selber ändern zu müssen. Es reicht eine Modifikation der Parameter für die Betätigung der Aktuatoren, die über die Bedienerschnittstelle eingebbar sind.

Die Parameter der Bewegung des mindestens einen Aktuators können den Start und/oder das Ende der Bewegung als Zeitpunkt nach Beginn des Spritzgießzyklus umfassen. Ferner können sie die Größe der Verschiebebewegung, die Geschwindigkeit und/oder die Beschleunigung des mindestens einen Aktuators umfassen.

Vorteilhaft ist es auch, wenn die Parameter mindestens eine Bedingung umfassen, unter der die Bewegung des Aktuators erfolgen soll (oder auch nicht erfolgen soll).

Die Eingabe der Parameter der Bewegung des mindestens einen Aktuators kann menügeführt über ein Display der Bedienerschnittstelle erfolgen.

Die Eingabe der Parameter der Bewegung des mindestens einen Aktuators kann über eine Tastatur der Bedienerschnittstelle erfolgen. Möglich ist es auch, dass die Eingabe der Parameter über einen Touch-Screen der Bedienerschnittstelle erfolgt.

Das Erfindungskonzept stellt also darauf ab, dass eine Erhöhung der Flexibilität der Gummispritzgießmaschine erreicht wird, um nicht bei jedem Produktwechsel eine Programmänderung des in der Maschinensteuerung hinterlegten Maschinenprogramms vornehmen zu müssen.

Über beispielsweise eine menügeführte Eingabe von Parametern über die Bedienerschnittstelle kann eine Programmierung der Hilfsaggregate und insbesondere der benötigten Aktuatoren erfolgen, ohne am Maschinenprogramm etwas ändern zu müssen.

Damit ist die Möglichkeit geschaffen, in die Maschinensteuerung einzugreifen, ohne über Programmierkenntnisse verfügen zu müssen und auch ohne eine spezielle Programmiersoftware und -hardware (beispielsweise Laptop) zur Verfügung haben zu müssen. Der Maschinenbediener kann über die Bedienerschnittstelle die Programmierung der Aktuatoren (Hilfszylinder) aufrufen und visualisiert über die Bedienerschnittstelle (Interface) die Parameter eingeben, die für die Betätigung des Aktuators benötigt werden. Über entsprechende Schnittstellen des Maschinenprogramms werden die so eingegebenen Parameter in das Programm eingesteuert und beim Programmablauf berücksichtigt.

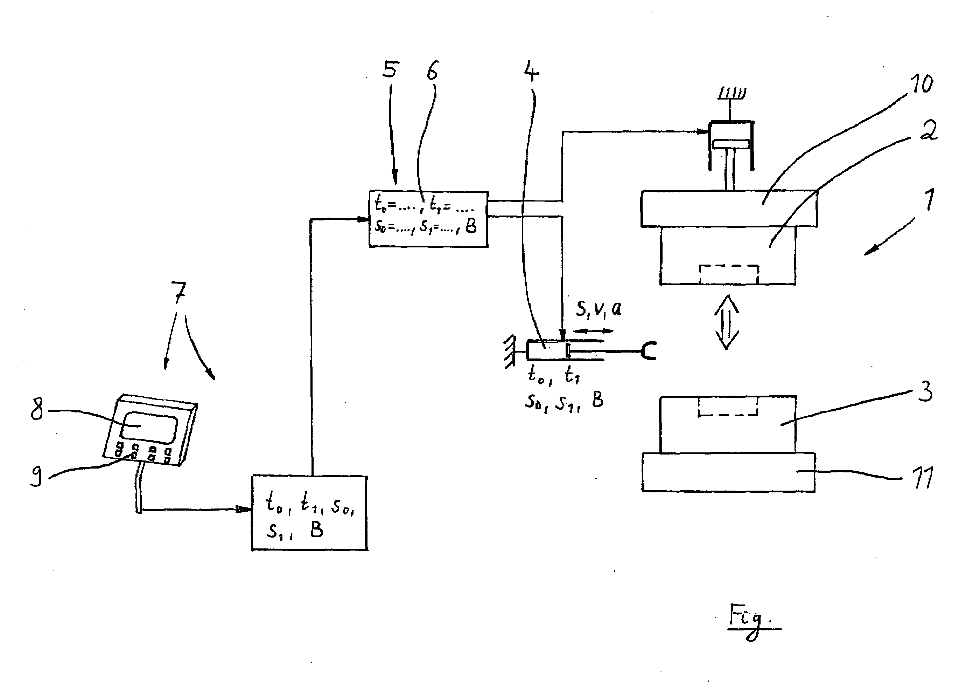

In der Zeichnung ist ein Ausführungsbeispiel der Erfindung dargestellt. Die einzige Figur zeigt sehr schematisch eine Gummispritzgießmaschine mit ihrer Maschinensteuerung sowie einer Bedienerschnittstelle zur Dateneingabe.

In der Figur ist eine Gummispritzgießmaschine 1 zu sehen, deren zentraler Teil die Bewegungseinrichtung für ein zweiteiliges Formwerkzeug 2, 3 ist. Die beiden Werkzeugteile 2 und 3 sind in bekannter Weise an entsprechenden Werkzeugaufspannplatten 10 und 11 befestigt. Nicht dargestellt ist eine Plastifiziereinheit zur Zuführung von plastifizierter Gummimasse in die Formkavität des Formwerkzeugs 2, 3.

Zur Ausführung von Hilfsbewegungen sind Aktuatoren vorgesehen. In der Figur ist ein Aktuator 4 in Form eines pneumatischen Kolben-Zylinder-Systems dargestellt. Alternativ kann auch beispielsweise ein hydraulisches Kolben-Zylinder-System oder auch ein elektrischer Aktuator vorgesehen sein.

Der Spritzgießzyklus in der Gummispritzgießmaschine 1 besteht aus einer Anzahl von Teilabläufen, die mit jeweiligen Bewegungen der Maschine einhergehen. Beispielhaft sei das Öffnen und Schließen des Spritzgießwerkzeugs 2, 3 genannt und die Einspritzbewegung oder die Bewegung eines Auswerfers zum richtigen Zeitpunkt. Bei jeder Bewegung fährt zumeist ein hydraulisches oder pneumatisches Kolben-Zylinder-System von einer Position (z. B. einer Endlage) in eine andere.

Bei verschiedenen Bewegungen ist es wichtig, dass sie nur dann erfolgen, wenn andere Bewegungen bereits erfolgt sind. Z. B. darf das Werkzeug 2, 3 nur dann schließen, wenn der Auswerfer eingefahren ist. Dies wird vorliegend unter dem Begriff der "Bedingung" zusammengefasst.

D. h. dass zum Schließen des Werkzeugs die Bedingung gegeben sein muss, dass der Auswerfer zurückgezogen ist, um Kollisionen zu vermeiden. Allgemeiner kann man sagen, dass ein gewisser Zustand vorliegen muss, bevor eine bestimmte Bewegung ausgeführt werden kann.

Die Koordination des Spritzgießzyklus sowie dessen Ablauf übernimmt ein Maschinenprogramm 6, das in einer Maschinensteuerung 5 gespeichert ist und dort im Betrieb der Maschinen abläuft.

Erfindungsgemäß ist das Maschinenprogramm als Rumpfprogramm ausgebildet, in das Parameter zur Betätigung des Aktuators 4 eingesteuert werden können, wobei diese Parameter die spezifischen Randbedingungen eines konkreten Anwendungsfalls (d. h. eines speziellen Spritzgießzyklus) definieren.

Als Randbedingungen, d. h. als maßgebliche Parameter zur Definition der Bewegung des Aktuators 4, kommen in Frage:
- der Startzeitpunkt t₀ der Bewegung des Aktuators 4,
- der Endzeitpunkt t₁ der Bewegung des Aktuators 4,
- die Startposition s₀ der Bewegung des Aktuators 4,
- die Endposition s₁ der Bewegung des Aktuators 4,
- die Geschwindigkeit v der Bewegung des Aktuators 4 (gegebenenfalls vorgegeben als funktionaler Verlauf),
- die Beschleunigung a der Bewegung des Aktuators 4 (gegebenenfalls vorgegeben als funktionaler Verlauf) sowie
- mindestens eine Bedingung B, die erfüllt sein muss (oder die nicht erfüllt sein darf), damit sich der Aktuator 4 überhaupt in Bewegung setzt.

Zu den Bedingungen sei angemerkt, dass alle vorhandenen Aktuatoren bzw. Bewegungselemente in der Gummi-Spritzgießmaschine eine Wechselwirkung haben werden. Die Betätigung eines Aktuators wird also im Allgemeinen einerseits auf die anderen Aktuatoren einen Einfluss ausüben, d. h. zu entsprechenden Bedingungen führen, andererseits aber auch von diesen beeinflusst werden. Die jeweiligen Wechselwirkungen können in entsprechenden Bedingungen definiert und vorgegeben werden.

Die Parameter können über eine Bedienerschnittstelle 7 (Interface) vom Bediener eingegeben werden, wozu diese ein Display 8 sowie eine Tastatur 9 aufweist.

Die eingegebenen Daten werden - was in der Figur schematisch angedeutet ist - in das Maschinenprogramm 6 in der Maschinensteuerung 5 eingesteuert und beim Steuern des Spritzgießzyklus zugrunde gelegt.

Wie zu sehen ist, ist es mithin ausreichend, ein "Rumpfprogramm" als Maschinenprogramm zur Verfügung zu haben; die konkreten Parameterdaten für die Aktuatoren 4 werden über die Bedienerschnittstelle 7 individuell definiert.

Damit ist das Vorhandensein eines einzigen programmierten Maschinenprogramms ausreichend, um Modifikationen des Prozesses zu realisieren, ohne das Maschinenprogramm selber ändern zu müssen; es reicht die Eingabe entsprechend modifizierter Parameter für die Aktuatoren 4.

### Bezugszeichenliste:

- 1: Gummispritzgicßmaschine
- 2,3: Formwerkzeug
- 2: Werkzeugteil
- 3: Werkzeugteil
- 4: Aktuator
- 5: Maschinensteuerung
- 6: Maschinenprogramm
- 7: Bedienerschnittstelle
- 8: Display
- 9: Tastatur
- 10: Werkzeugaufspannplatte
- 11: Werkzeugaufspannplatte

- s: Bewegung
- v: Geschwindigkeit
- a: Beschleunigung
- t₀: Startzeitpunkt der Bewegung
- t₁: Endzeitpunkt der Bewegung
- s₀: Startposition der Bewegung
- s₁: Endposition der Bewegung
- B: Bedingung

## Patentansprüche

1. Verfahren zum Spritzgießen eines Gummi-Formteils in einer Gummispritzgießmaschine (1), wobei die Gummi-Spritzgießmaschine (1) ein mindestens zweiteiliges Formwerkzeug (2, 3) sowie mindestens einen vorzugsweise als pneumatisches oder hydraulisches Kolben-Zylinder-System ausgebildeten Aktuator (4) zur Ausführung einer Hilfsbewegung während des Spritzgießprozesses aufweist, wobei der Spritzgießzyklus der Maschine von einer Maschinensteuerung (5) gemäß einem gespeicherten Maschinenprogramm (6) gesteuert bzw. geregelt wird und wobei das Verfahren die Schritte aufweist:
a) Hinterlegen bzw. Speichern eines Maschinenprogramms (6) in der Maschinensteuerung (5) oder in einem der Maschinensteuerung (5) zugeordneten Speicherelement, wobei das Maschinenprogramm (6) die Steuerbefehle für zumindest einen vollständigen Spritzgießzyklus und insbesondere für die Bewegung des mindestens einen Aktuators (4) aufweist;
b) Ausführung des Maschinenprogramms (6) für eine gewünschte Anzahl Spritzgießzyklen, wobei das Maschinenprogramm (6) veranlasst, dass der zumindest eine Aktuator (4) mit vorgegebenen Bewegungsparametern eine definierte Bewegung (s) ausführt;
**dadurch gekennzeichnet,**
**dass** die Parameter (t₀, t₁, s₀, s₁, v, a, B) der Bewegung des mindestens einen Aktuators (4) vor dem Start des Spritzgießzyklus über eine Bedienerschnittstelle (7) der Spritzgießmaschine (1) in die Maschinensteuerung (5) eingegeben wird, wobei die über die Bedienerschnittstelle (7) eingegebenen Daten über Schnittstellen des Maschinenprogramms (6) in dieses aufgenommen werden.

2. Verfahren nach Anspruch 1, **dadurch gekennzeichnet, dass** die Parameter (t₀, t₁, s₀, s₁, v, a, B) der Bewegung des mindestens einen Aktuators (4) den Start (t₀) und/oder das Ende (t₁) der Bewegung (s) als Zeitpunkt nach Beginn des Spritzgießzyklus umfassen.

3. Verfahren nach Anspruch 1, **dadurch gekennzeichnet, dass** die Parameter (t₀, t₁, s₀, s₁, v, a, B) die Größe (s₀, s₁) der Verschiebebewegung des mindestens einen Aktuators (4) umfassen.

4. Verfahren nach Anspruch 1, **dadurch gekennzeichnet, dass** die Parameter (t₀, t₁, s₀, s₁, v, a, B) die Geschwindigkeit (v) der Verschiebebewegung des mindestens einen Aktuators (4) umfassen.

5. Verfahren nach Anspruch 1, **dadurch gekennzeichnet, dass** die Parameter (t₀, t₁, s₀, s₁, v, a, B) die Beschleunigung (a) der Verschiebebewegung des mindestens einen Aktuators (4) umfassen.

6. Verfahren nach Anspruch 1, **dadurch gekennzeichnet, dass** die Parameter (t₀, t₁, s₀, s₁, v, a, B) mindestens eine Bedingung (B) umfassen, unter der die Bewegung des Aktuators (4) erfolgen soll.

7. Verfahren nach Anspruch 1, **dadurch gekennzeichnet, dass** die Parameter (t₀, t₁, s₀, s₁, v, a, B) mindestens eine Bedingung (B) umfassen, unter der die Bewegung des Aktuators (4) nicht erfolgen soll.

8. Verfahren nach einem der Ansprüche 1 bis 7, **dadurch gekennzeichnet, dass** die Eingabe der Parameter (t₀, t₁, s₀, s₁, v, a, B) der Bewegung des mindestens einen Aktuators (4) menügeführt über ein Display (8) der Bedienerschnittstelle (7) erfolgt.

9. Verfahren nach einem der Ansprüche 1 bis 8, **dadurch gekennzeichnet, dass** die Eingabe der Parameter (t₀, t₁, s₀, s₁, v, a, B) der Bewegung des mindestens einen Aktuators (4) über eine Tastatur (9) der Bedienerschnittstelle (7) erfolgt.

10. Verfahren nach einem der Ansprüche 1 bis 8, **dadurch gekennzeichnet, dass** die Eingabe der Parameter (t₀, t₁, s₀, s₁, v, a, B) der Bewegung des mindestens einen Aktuators (4) über einen Touch-Screen der Bedienerschnittstelle (7) erfolgt.
